# EUROPÄISCHE PATENTSCHRIFT

(11) **EP 2 659 760 B1**
(45) Veröffentlichungstag und Bekanntmachung des Hinweises auf die Patenterteilung: **25.05.2016**
(21) Anmeldenummer: 13166186.0
(22) Anmeldetag: 02.05.2013
(51) Int. Cl.: A01D 34/66, A01D 34/71

(54) **Mähgerät**
Mowing device
Faucheuse

(30) Priorität: 04.05.2012 DE 102012207459
(43) Veröffentlichungstag der Anmeldung: 06.11.2013
(73) Patentinhaber: Deere & Company, Moline, IL 61265 (US)
(72) Erfinder: Gonzalez, Ivan Alejan, 64630 Monterrey (MX)
(74) Vertreter: Reichert, Christian

(56) Entgegenhaltungen:
- EP-A1- 1 186 221
- EP-A1- 2 609 804
- DE-A1-102008 035 037

## Beschreibung

Mähgerät mit einer mittleren und seitlichen Mäheinrichtungen, wobei die Mäheinrichtungen jeweils einen Mäheraufbau mit auf der Unterseite des Mäheraufbaus um eine vertikale Rotationsachse rotierend antreibbare Mähmesser umfassen, deren Enden eine Kreisbahn beschreiben und wobei an wenigstens einer seitlichen Mäheinrichtung unterhalb des Mäheraufbaus ein Leitelement angeordnet ist, welches die Kreisbahn wenigstens teilweise umgibt und sich vom Mäheraufbau nach unten erstreckt, so dass von einem Mähmesser geschnittenes Schnittgut vom Leitelement zurückgehalten bzw. abgeleitet wird.

Mähgeräte der oben beschriebenen Art sind bekannt und werden zum Mähen, Schneiden bzw. Ernten verschiedenster Arten von landwirtschaftlichem Mäh- bzw. Schnittgut verwendet. Derartige Mähgeräte können beispielsweise als gezogene Geräte, an die Anhängekupplung eines Schleppers gebaut, betrieben werden. Je nach Größe weisen die Mähgeräte mehrere nebeneinander angeordnete Mäheinrichtungen auf, die jeweils einen Mähaufbau umfassen, an dem auf der Unterseite mit Mähmessern bestückte Scheiben angeordnet sind, die jeweils um eine Rotationsachse rotierend über die Zapfwelle des Schleppers und über entsprechend angeordnete Antriebsstränge angetrieben werden. Die an den Scheiben geführten Mähmesser werden in einer Kreisbahn geführt, in der das Mäh- bzw. Schnittgut geschnitten wird. So sind beispielsweise Mähgeräte mit einer mittleren und zwei seitlichen Mäheinrichtungen bekannt, wobei die seitlichen Mäheinrichtungen mit Mähaufbauten in Flügelkonstruktion ausgebildet sind, die zu Transportzwecken hochgeklappt und zu Betriebszwecken abgelassen werden können. In der Regel rotieren bei den seitlichen Mäheinrichtungen die Mähmesser in entgegengesetzter Drehrichtung, derart, dass das geschnittene Schnittgut zur Mitte befördert wird. Die Mäheinrichtungen können mit unterhalb der Mähaufbauten angeordneten Leitelementen bzw. Leitblechen bestückt sein, durch die in einem gewissen Maße der durch die Rotation der Mähmesser hervorgerufene Auswurf des geschnittenen Schnittguts beeinflusst bzw. geleitet oder ein unkontrollierter Auswurf unterbunden werden kann. Dadurch können Anhäufungen in Form eines Schwads aus geschnittenem bzw. gemähtem Schnittgut begünstigt bzw. gezielt hervorgerufen und durch ein nachlaufendes Gerät, beispielsweise einer Ballenpresse, aufgenommen werden. Für andere Anwendungsgebiete ist jedoch gerade eine Schwadbildung hinderlich und deshalb ungewollt, beispielsweise beim Mähen oder Schreddern von Ernterückständen, die bei Neubepflanzung des Ackers in den Ackerboden mit eingearbeitet bzw. im Vorfeld einer Neupflanzung zwar abgemäht bzw. geschnitten jedoch nicht aufgesammelt werden sollen. Hier ist es wünschenswert eine über die gesamte Mähfläche möglichst gleichmäßige Verteilung des Mäh- bzw. Schnittgut zu erzielen, um den anschließenden Neupflanzungsprozess so wenig wie möglich zu behindern.

Ein für derartige Anwendungsgebiete ausgebildetes Mähgerät wird beispielsweise in der DE 10 2008 035 037 A1 offenbart. Es wird ein Mähgerät mit einer mittleren und zwei seitlich angeordneten Mäheinrichtungen beschrieben. Um eine über die Mähfläche möglichst gleichmäßige Verteilung von gemähtem bzw. geschnittenem Mäh- bzw. Schnittgut zu erzielen sind unterhalb der Mähaufbauten Leitbleche derart ausgebildet, dass sie nur teilweise entlang der durch die Mähmesser beschriebenen Kreisbahnen angeordnet sind bzw. eine solche nur teilweise umgeben. Die Leitbleche erstrecken sich ausgehend vom Mähaufbau nach unten hin und kennzeichnen sich dadurch, dass sie an den seitlichen Mähaufbauten die jeweilige durch die Mähmesser beschriebene Kreisbahn nur entlang eines relativ kleinen Abschnitts in einem hinteren seitlichen Bereich von einem Leitblech umgeben. Ferner ist an dem mittleren Mähaufbau ein in Mährichtung vorn geöffnetes Leitblech angeordnet, welches in dem hinteren und den seitlichen Bereichen der Kreisbahn ausgebildet und höhenverstellbar am Mähaufbau montiert ist. Eine weitgehend gleichmäßige Verteilung des gemähten Schnittguts kann hierdurch erzielt werden, wobei weiterhin Raum für eine Optimierung, insbesondere über die gesamte Mähfläche, gegeben ist.

Die der Erfindung zugrunde liegende Aufgabe wird darin gesehen, ein Mähgerät der eingangs genannten Art anzugeben, welches durch die gleichmäßige Verteilung von gemähtem Mähgut weitergehend optimiert wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst ein Mähgerät der eingangs genannten Art ein Leitelement, das in einem in Mährichtung vorn gelegenen Kreisbahnabschnitt angeordnet ist, wobei in dem Leitelement wenigstens eine Ausnehmung ausgebildet ist, die einen ersten Abschnitt umfasst, der zwischen einer in Mährichtung und in Rotationsachsenrichtung liegenden Ebene und der mittleren Mäheinrichtung gelegen ist, und einen zweiten Abschnitt umfasst, der zwischen derselben Ebene und einer Seite des Mähgeräts gelegen ist, wobei der erste und der zweite Abschnitt zueinander verschiedene Konturen und die Kontur des ersten und des zweiten Abschnitts der Ausnehmung unterschiedliche Krümmungen aufweist und wobei die Form der Kontur des ersten Abschnitts einen vom unteren Rand des Leitelements tiefer einschneidenden Bereich der Ausnehmung darstellt als die Form der Kontur des zweiten Abschnitts. Ein in Mährichtung vorn gelegener Kreisbahnabschnitt versteht sich als ein Kreisbahnabschnitt, der in Mährichtung gesehen vor einer Ebene liegt, die quer zur Mährichtung und in Rotationsachsenrichtung verläuft. Dadurch, dass die Ausnehmung einen ersten und einen zweiten Abschnitt umfasst, kann die Schnittgutablage unterhalb des Mäheraufbaus optimal beeinflusst werden, so dass Schnittgutmaterial in einer bestimmten vorgebbaren Menge und für einen bestimmten Bereich des Kreisumfangs durchgelassen bzw. gezielt in einem anderen Bereich abgehalten bzw. abgeklenkt werden. Dadurch wird über eine gesamte Ablagefläche eine gleichmäßige Verteilung des Mäh- bzw. Schnittguts erzielt. Ungleichmäßige Anhäufungen von Schnittgut werden vermieden. Vorzugsweise sind beide seitlichen Mäheinrichtungen mit einem Leitelement der oben genannten Art versehen. Der erste und der zweite Abschnitt können in ihrer Kontur zudem auch unterschiedlich ausgeformt sein, so dass dadurch eine noch gleichmäßigere Verteilung des Mähguts zu erwarten ist. Insbesondere die Form der Kontur kann dabei eine wesentliche Rolle spielen. Welche Konturen für die einzelnen Abschnitte und für welches Schnittgut und welche Mähbedingungen optimal ist kann durch entsprechende Feldversuche ermittelt werden. Die Kontur des ersten und des zweiten Abschnitts der Ausnehmung kann beispielsweise unterschiedliche Krümmungen und Verläufe aufweisen, wobei die Form der Kontur des ersten Abschnitts einen vom unteren Rand des Leitelements tiefer einschneidenden Bereich der Ausnehmung darstellt als die Form der Kontur des zweiten Abschnitts. Die Abschnitte können zudem auch unterschiedlich lang zueinander ausgebildet sein, so dass beispielsweise die Kontur des ersten Abschnitts einen längeren und flacheren und die des zweiten Abschnitts einen kürzeren und gekrümmteren Verlauf aufweist.

Auch können die Abschnitte ineinander übergehen, so dass der erste Abschnitt direkt in den zweiten Abschnitt mündet.

Das Leitelement kann mehrere Teilleitelemente umfassen, wobei der erste und/oder der zweite Abschnitt in einem der Teilleitelemente ausgebildet ist. Das Leitelement kann demnach durch mehrere Segmente eines Leitbleches ausgebildet sein, wobei ein Segment ein Teilelement darstellt und einen bestimmten Bereich der Kreisbahn abdeckt. Die Abschnitte der Ausnehmung können dabei an einem Segment ausgebildet sein oder sich auch über mehrere Segmente verteilen. Durch Austausch nur eines Segments mit einer bestimmten Kontur für einen Abschnitt durch ein Segment mit einer anderen Kontur für einen Abschnitt kann die Ausnehmung als solche verändert und an sich ändernde Gegebenheiten und Betriebszustände angepasst werden. Das Leitelement bzw. die Teilleitelemente oder Segmente können als gebogene Bleche aus Metall, Kunststoff oder auch aus einem elastischen Material wie Gummi oder dergleichen ausgebildet sein.

Ferner kann ein weiteres Leitelement vorgesehen sein, welches in einem zur mittleren Mäheinrichtung gelegenen Kreisbahnabschnitt angeordnet ist und sich dem ersten Leitelement anschließt. Insbesondere kann so das von den Mähmessern geschnittene Schnittgut davon abgehalten werden in einen in der mittleren Mäheinrichtung liegenden Bereich zu geraten und Anhäufungen zu bilden. Anhäufungen von Schnittgut werden vermieden. Beide seitlichen Mäheinrichtungen können mit einem solchen weiteren Leitelement versehen sein.
Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische perspektivische Seitenansicht eines erfindungsgemäßen Mähgeräts von vorn, oben
- Fig. 2: eine schematische perspektivische Seitenansicht eines in Mährichtung linkseitig angeordneten Mäheraufbaus des Mähgeräts aus Figur 1 von vorn, unten,
- Fig. 3: eine schematische Seitenansicht eines Leitelements mit einem ersten Abschnitt und
- Fig. 4: eine schematische Seitenansicht des Leitelements mit einem zweiten Abschnitt.

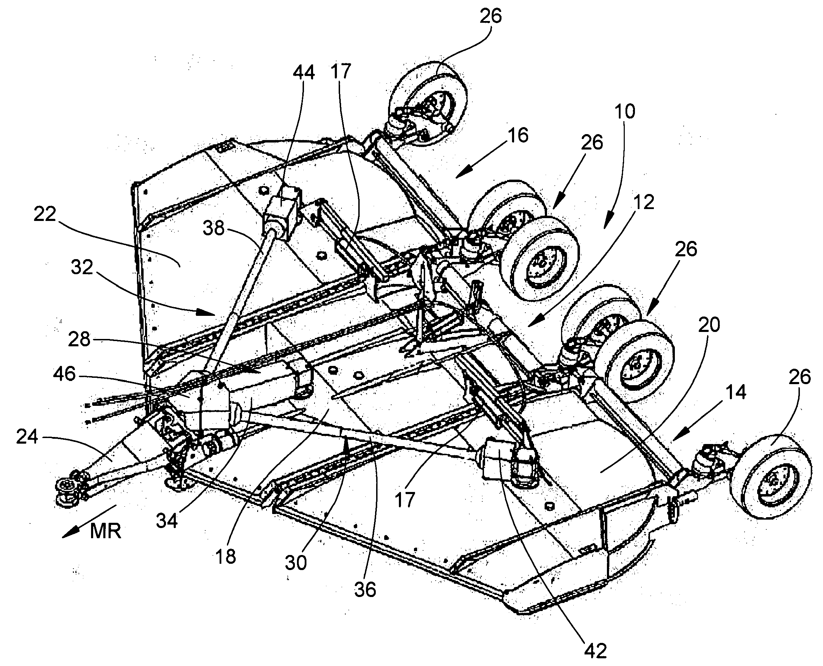

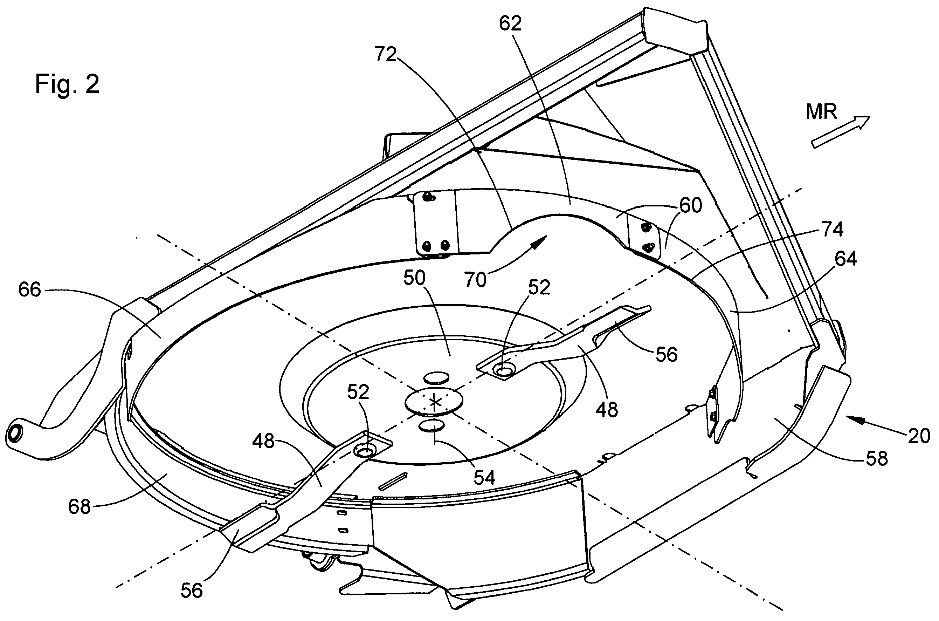

Figur 1 zeigt ein Mähgerät 10 zum Anhängen an einen landwirtschaftlichen Schlepper (nicht gezeigt). Das Mähgerät 10 umfasst eine mittlere Mäheinrichtung 12 an die sich beidseitig jeweils eine seitliche Mäheinrichtung 14, 16 anschließt. Die seitlichen Mäheinrichtungen 14, 16 sind als Flügelkonstruktion ausgebildet und sind an der mittleren Mäheinrichtung 12 schwenkbar angeordnet, so dass sie anhand von Aktuatoren 17 oder Motoren, beispielsweise Hydraulikzylinder, aus einer Betriebsstellung zum Mähen in eine Transportstellung zum Transportieren aufgestellt bzw. hochgeklappt werden können und umgekehrt. Jede der Mäheinrichtungen 12, 14, 16 umfasst jeweils einen Mäheraufbau 18, 20, 22. Die in Figur 1 in Mährichtung MR von oben betrachtet links gelegene Mäheinrichtung 14 bzw. der entsprechend links gelegene Mäheraufbau 20 wird im Folgenden anhand der Darstellung in Figur 2 weiter im Detail beschrieben.

Der mittlere Mäheraufbau 18 ist mit einer Deichsel 24 bestückt, welche an einer Anhängekupplung (nicht gezeigt) des Schleppers anschließbar ist und über welche sich das Mähgerät 10 an seiner Vorderseite am Schlepper abstützt. Am hinteren Ende des Mähgeräts 10 sind an den einzelnen Mäheinrichtungen 12, 14, 16 Laufräder 26 angeordnet, mit denen das Mähgerät 10 über den Boden geführt wird.

Jede Mäheinrichtung 12, 14, 16 umfasst einen eigenen Antriebsstrang 28, 30, 32 mit jeweils einer Antriebswelle 34, 36, 38 und einem Winkelübersetzungsgetriebe 40, 42, 44. Die Antriebswellen 34, 36, 38 münden gemeinsam in ein von einer Zapfwelle (nicht gezeigt) des Schleppers antreibbares Verzweigungsgetriebe 46.

Über die jeweiligen Winkelgetriebe 40, 42, 44 werden unterhalb der einzelnen Mäheraufbauten 18, 20, 22 gelegene Mähmesser 48 angetrieben, siehe als Beispiel Figur 2. Die Mähmesser 48 sind auf einer Mäh- bzw. Drehscheibe 50 an Schwenkbolzen 52 schwenkbar gelagert und richten sich durch eine auf sie wirkende Fliehkraft radial nach außen aus. Die jeweiligen Drehscheiben 50 sind mit den entsprechend zugehörigen Winkelgetrieben 40, 42, 44 antriebsverbunden. Die Mähmesser 48 können auch in Form eines Propellers ausgebildet sein, so dass der Antrieb der Mähmesser 48 alternativ auch direkt über eine Antriebsachse am Propeller erfolgen kann. Die Mähmesser 48 sowie die Drehscheiben 50 rotieren um eine Rotationsachse 54, wobei die Enden 56 der Mähmesser 48 eine Kreisbahn beschreiben. Seitlich des Mäheraufbaus 20 ist eine sich unterhalb des Mäheraufbaus 20 nach unten (zum Boden) erstreckende Seitenwand 58 ausgebildet, welche den Mäheraufbau 20 in einem seitlichen Abschnitt der genannten Kreisbahn seitlich nach außen abgrenzt bzw. abschirmt. An die Seitenwand 58 schließt sich vorderseitig des Mähgeräts 10 ein ringsegmentförmiges erstes Leitelement 60 an. Das Leitelement 60 ist in Form eines Leitblechs aus Metall, vorzugsweise als Stahlblech, ausgebildet. Auch ein robuster Kunststoff oder eine Gummimatte wäre hier einsetzbar. Das Leitelement 60 erstreckt sich ebenfalls unterhalb des Mäheraufbaus 20 nach unten hin und stellt eine Abgrenzung bzw. Abschirmung dar, die sich über einen vorderen Abschnitt der von den rotierenden Enden 56 der Mähmesser 48 beschriebenen Kreisbahn erstreckt, der nicht von der Seitenwand 58 abgeschirmt wird.

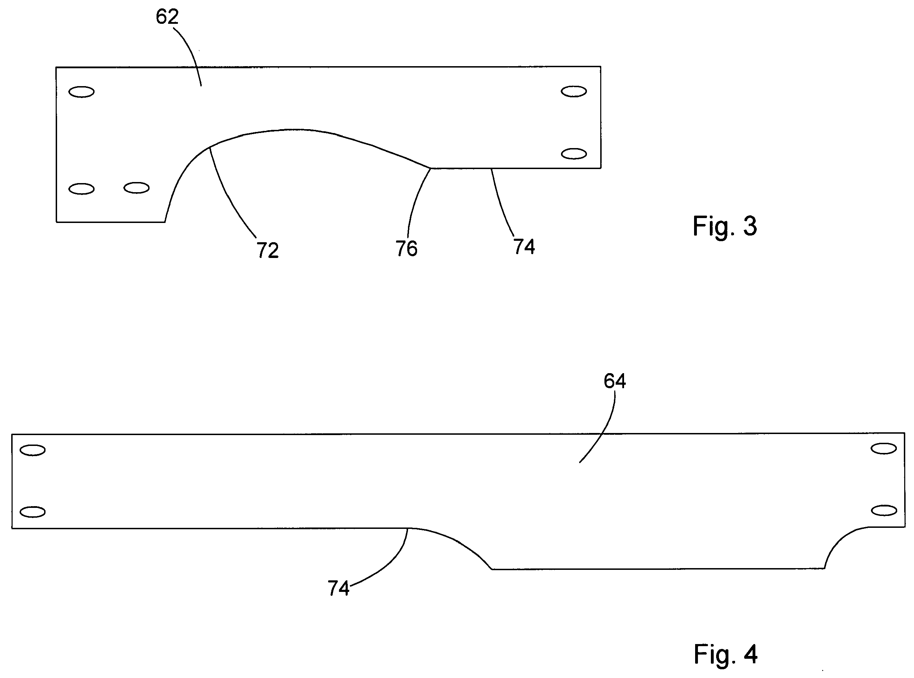

Das Leitelement 60 umfasst zwei oder mehr Teilleitelemente 62, 64 wovon die Teilleitelemente 62, 64 sich über einen Abschnitt der Kreisbahn erstrecken, der bezogen auf die Mährichtung MR vor der Rotationsachse liegt. Eine weitere hintere Seitenwand 68 erstreckt sich ausgehend von der Seitenwand 58 um einen hinteren Abschnitt der beschriebenen Kreisbahn des Mäheraufbaus 20. Ein weiteres (zweites) Leitelement 66 erstreckt sich über einen Abschnitt des Kreisbahn der sich zwischen dem ersten Leitelement 60 und der hinteren Seitenwand 68 erstreckt und somit einen Abschnitt der Kreisbahn zur mittleren Mäheinrichtung 12 hin abgrenzt bzw. abschirmt, der zum Teil vor der Rotationsachse 54 und zum Teil hinter der Rotationsachse 54 liegt. Das weitere (zweite) Leitelement 66 kann sich dabei an das erste Leitelement 60 direkt anschließen. Die hintere Seitenwand 68 grenzt einen hinter der Rotationsachse 54 liegenden Kreisbahnabschnitt ein bzw. schirmt einen solchen ab. Ferner sind die Teilleitelemente 62 und 64 derart angeordnet, dass das Teilleitelement 62 einen Abschnitt der Kreisbahn umschließt bzw. abschirmt, der sich vor der Rotationsachse 54 und zur mittleren Mäheinrichtung 12 hin erstreckt und dass das Teilleitelement 64 überwiegend einen Abschnitt der Kreisbahn umschließt bzw. eingrenzt, der sich vor der Rotationsachse 54 und zur Seite des Mähgeräts 10 hin erstreckt. Die Formulierungen "vor der Rotationsachse 54" und "hinter der Rotationsachse 54" verstehen sich als Definition eines Bereichs, der in Mährichtung MR gesehen, vor bzw. hinter der Ebene liegt, die quer zur Mährichtung MR und auf der Rotationsachse 54 verläuft. Die Teilleitelemente 62, 64 (welche das Leitelement 60 bilden) sowie das weitere Leitelement 66 sind im vorliegenden Ausführungsbeispiel als Segmente oder Elemente (Teile) eines zusammengesetzten Leitbleches ausgebildet. Das Leitelement 60 kann jedoch auch einteilig ausgebildet sein und mehrere Teilbereiche aufweisen, die entsprechend der oben beschriebenen Teilleitelemente 62, 64 ausgebildet bzw. angeordnet sind. An dem Leitelement 60 ist eine zum Boden, also nach unten, geöffnete Ausnehmung 70 bzw. ein zum Boden geöffneter Ausschnitt ausgebildet, welche bzw. welcher einen ersten Abschnitt 72 und einen zweiten Abschnitt 74 umfasst (siehe insbesondere Figuren 3 und 4 in Verbindung mit Figur 2). Der erste Abschnitt 72 ist in dem Teilleitelement 62 gelegen und erstreckt sich somit vor der Rotationsachse 54, zwischen der mittleren Mäheinrichtung 12 und der Ebene, die auf der Rotationsachse 54 und in Mährichtung MR verläuft. Der zweite Abschnitt 74 ist teilweise in dem Teilleitelement 62 jedoch überwiegend in dem Teilleitelement 64 gelegen und erstreckt sich somit überwiegend in Mährichtung MR vor der Rotationsachse 54, zwischen der Seite des Mähgeräts 10 und der Ebene, die auf der Rotationsachse 54 und in Mährichtung MR verläuft. Mit anderen Worten, die Abschnitte 72 und 74 grenzen aneinander und werden durch die Ebene, die auf der Rotationsachse 54 und in Mährichtung MR verläuft, getrennt. Die Abschnitte 72, 74 sind im vorliegenden Ausführungsbeispiel verschiedenartig ausgebildet und ergänzen sich zu einer unsymmetrischen Ausnehmung 70 bzw. zu einem unsymmetrischen Ausschnitt. Durch entsprechende Gestaltung der Abschnitte 72, 74 kann die Ausnehmung 70 bzw. der Ausschnitt jedoch auch symmetrisch ausgebildet sein. Durch Versuche hat sich hier jedoch ergeben, dass die Ausgestaltung der Ausnehmung 70 bzw. des Ausschnitts mit verschieden ausgestalteten Abschnitten 72, 74, verbesserte Ergebnisse hinsichtlich der Gleichmäßigkeit einer Verteilung von gemähtem Mähgut liefert. So weist die Ausnehmung 70 bzw. der Ausschnitt im ersten Abschnitt 72 eine tiefer laufende und krümmere Kontur auf, als im zweiten Abschnitt 74, hingegen im zweiten Abschnitt 74 ein insgesamt längerer aber flacherer Konturverlauf ausgebildet ist, als im ersten Abschnitts 72. Mit anderen Worten, die Form der Kontur im ersten Abschnitt 72 stellt eine bzw. einen ausgehend vom unteren Rand (vom zum Boden gerichteten Rand) des Leitelements 60 tiefer einschneidende Ausnehmung 70 bzw. Ausschnitt dar, als die Form der Kontur im zweiten Abschnitt 74 (siehe insbesondere Darstellung in den Figuren 3 und 4). Die Abschnitte 72, 74 sind so ausgebildet, dass sie an einem Konturwechselpunkt 76 ineinander übergehen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Mähgerät (10) mit einer mittleren und seitlich angeordneten Mäheinrichtungen (12, 14, 16), wobei die Mäheinrichtungen (12, 14, 16) jeweils einen Mäheraufbau (18, 20, 22) mit auf der Unterseite des Mäheraufbaus (18, 20, 22) um eine vertikale Rotationsachse (54) rotierend antreibbare Mähmesser (48) umfassen, deren Enden (56) eine Kreisbahn beschreiben und wobei an wenigstens einer seitlich angeordneten Mäheinrichtung (14, 16) unterhalb des Mäheraufbaus (20, 22) ein Leitelement (60) angeordnet ist, welches die Kreisbahn wenigstens teilweise umgibt und sich vom Mäheraufbau (20, 22) nach unten erstreckt, so dass von einem Mähmesser (48) geschnittenes Schnittgut vom Leitelement (60) zurückgehalten bzw. abgeleitet wird, **dadurch gekennzeichnet, dass** das Leitelement (60) in einem in Mährichtung (MR) vorn gelegenen Kreisbahnabschnitt angeordnet ist und in dem Leitelement (60) wenigstens eine Ausnehmung (70) ausgebildet ist, die einen ersten Abschnitt (72) umfasst, der zwischen der mittleren Mäheinrichtung (12) und einer in Mährichtung (MR) und in Rotationsachsenrichtung verlaufenden Ebene gelegen ist, und einen zweiten Abschnitt (74) umfasst, der zwischen derselben Ebene und einer Seite des Mähgeräts (10) gelegen ist, wobei der erste und der zweite Abschnitt (72, 74) zueinander verschiedene Konturen und die Kontur des ersten und des zweiten Abschnitts (72, 74) der Ausnehmung (70) unterschiedliche Krümmungen aufweist und wobei die Form der Kontur des ersten Abschnitts (72) einen vom unteren Rand des Leitelements (60) tiefer einschneidenden Bereich der Ausnehmung (70) darstellt als die Form der Kontur des zweiten Abschnitts (74).

2. Mähgerät (10) nach Anspruch 1, **dadurch gekennzeichnet, dass** der erste und der zweite Abschnitt (72, 74) in einander übergehen.

3. Mähgerät (10) nach einem der vorhergehenden Ansprüche, **dadurch gekennzeichnet, dass** das Leitelement (60) mehrere Teilleitelemente (62, 64) umfasst, wobei der erste und/oder der zweite Abschnitt (72, 74) in einem der Teilleitelemente (62, 64) ausgebildet ist.

4. Mähgerät (10) nach einem der vorhergehenden Ansprüche, **dadurch gekennzeichnet, dass** ein weiteres Leitelement (66) vorgesehen ist, welches in einem zur mittleren Mäheinrichtung (12) gelegenen Kreisbahnabschnitt angeordnet ist und sich dem ersten Leitelement (60) anschließt.

## Claims

1. Mower (10) having one central and laterally arranged mowing devices (12, 14, 16), wherein the mowing devices (12, 14, 16) each comprise a mower structure (18, 20, 22) having mowing knives (48) that are drivable in rotation on the underside of the mower structure (18, 20, 22) about a vertical rotation axis (54), the ends (56) of said mowing knives (48) describing a circular path, and wherein a guiding element (60) is arranged on at least one laterally arranged mowing device (14, 16) underneath the mower structure (20, 22), said guiding element (60) at least partially surrounding the circular path and extending downwardly from the mower structure (20, 22) such that cut material cut by a mowing knife (48) is retained or guided away by the guiding element (60), **characterized in that** the guiding element (60) is arranged in a circular path section that is located at the front in the mowing direction (MR) and at least one recess (70) is formed in the guiding element (60), said recess (70) comprising a first section (72) which is located between the central mowing device (12) and a plane that extends in the mowing direction (MR) and in the direction of the rotation axis, and comprising a second section (74) which is located between the same plane and a side of the mower (10), wherein the first and second sections (72, 74) have different contours from one another and the contours of the first and second sections (72, 74) of the recess (70) have different curvatures and wherein the shape of the contour of the first section (72) represents a region of the recess (70) that cuts in more deeply from the lower rim of the guiding element (60) compared with the shape of the contour of the second section (74).

2. Mower (10) according to Claim 1, **characterized in that** the first and second sections (72, 74) merge into one another.

3. Mower (10) according to either of the preceding claims, **characterized in that** the guiding element (60) comprises a plurality of guiding element parts (62, 64), wherein the first and/or the second section (72, 74) is formed in one of the guiding element parts (62, 64).

4. Mower (10) according to one of the preceding claims, **characterized in that** a further guiding element (66), which is arranged in a circular path section located towards the central mowing device (12) and adjoins the first guiding element (60), is provided.

## Revendications

1. Faucheuse (10) comprenant un dispositif de fauchage central et des dispositifs de fauchage disposés latéralement (12, 14, 16), les dispositifs de fauchage (12, 14, 16) comprenant chacun une structure de faucheuse (18, 20, 22) avec des lames de faucheuse (48) pouvant être entraînées en rotation autour d'un axe de rotation vertical (54) du côté inférieur de la structure de faucheuse (18, 20, 22), dont les extrémités (56) décrivent une trajectoire circulaire, et un élément de guidage (60) étant disposé au niveau d'au moins un dispositif de fauchage disposé latéralement (14, 16) sous la structure de faucheuse (20, 22), lequel entoure au moins en partie la trajectoire circulaire et s'étend vers le bas depuis la structure de faucheuse (20, 22), de telle sorte qu'un produit coupé par une lame de faucheuse (48) soit retenu ou évacué par l'élément de guidage (60), **caractérisée en ce que** l'élément de guidage (60) est disposé dans une section de trajectoire circulaire placée à l'avant dans la direction de fauchage (MR) et au moins un évidement (70) est réalisé dans l'élément de guidage (60), lequel comprend une première section (72) qui est placée entre le dispositif de fauchage central (12) et un plan s'étendant dans la direction de fauchage (MR) et dans la direction de l'axe de rotation, et une deuxième section (74) qui est située entre le même plan et un côté de la faucheuse (10), la première et la deuxième section (72, 74) présentant des contours différents l'un de l'autre et le contour de la première et de la deuxième section (72, 74) de l'évidement (70) présentant des courbures différentes et la forme du contour de la première section (72) constituant une région de l'évidement (70) entaillant plus profondément depuis le bord inférieur de l'élément de guidage (60) que la forme du contour de la deuxième section (74).

2. Faucheuse (10) selon la revendication 1, **caractérisée en ce que** la première et la deuxième section (72, 74) se prolongent l'une dans l'autre.

3. Faucheuse (10) selon l'une quelconque des revendications précédentes, **caractérisée en ce que** l'élément de guidage (60) comprend plusieurs éléments de guidage partiels (62, 64), la première et/ou la deuxième section (72, 74) étant réalisées dans l'un des éléments de guidage partiels (62, 64) .

4. Faucheuse (10) selon l'une quelconque des revendications précédentes, **caractérisée en ce qu'**un élément de guidage supplémentaire (66) est prévu, lequel est disposé dans une section de trajectoire circulaire placée vers le dispositif de fauchage central (12) et se raccorde au premier élément de guidage (60).
